# EUROPÄISCHE PATENTSCHRIFT

(11) **EP 3 757 987 B1**
(45) Veröffentlichungstag und Bekanntmachung des Hinweises auf die Patenterteilung: **07.12.2022**
(21) Anmeldenummer: 20192303.4
(22) Anmeldetag: 08.02.2017
(51) Int. Cl.: G10K 11/175, G10K 11/26, H04R 1/10, H04R 5/02, H04R 1/28, H04R 1/02, H04R 1/34

(54) **AUDIOSYSTEM MIT STRAHLFORMENDEN LAUTSPRECHERN SOWIE BRILLE MIT EINEM DERARTIGEN AUDIOSYSTEM**
AUDIO SYSTEM WITH BEAMFORMING LOUDSPEAKERS AND SPECTACLES WITH SUCH AN AUDIO SYSTEM
SYSTÈME AUDIO POURVU DE HAUT-PARLEURS FORMANT UN FAISCEAU ET PAIR DE LUNETTES DOTÉE D'UN TEL SYSTÈME AUDIO

(30) Priorität: 26.02.2016 DE 102016103477
(43) Veröffentlichungstag der Anmeldung: 30.12.2020
(62) Teilanmeldung aus: 17704440.1
(73) Patentinhaber: Usound GmbH, 8020 Graz (AT)
(72) Erfinder: RUSCONI CLERICI BELTRAMI, Andrea, 1130 Wien (AT); BOTTONI, Ferruccio, 8020 Graz (AT); SONTACCHI, Alois, 8112 Gratwein-Strassengel (AT); POMBERGER, Hannes, 8010 Graz (AT)
(74) Vertreter: Canzler & Bergmeier Patentanwälte Partnerschaft mbB

(56) Entgegenhaltungen:
- WO-A1-2017/123580
- US-A1- 2003 067 585
- US-A1- 2009 180 657
- US-A1- 2013 308 786
- US-A1- 2014 268 016

## Beschreibung

Die vorliegende Erfindung betrifft ein Audiosystem zum Anordnen im Außenbereich eines Ohres, gemäß dem Anspruch 1 , u.a. mit einem am Kopf des Benutzers anbringbaren Trägerelement, dass zumindest einen Hohlraum mit einer Primäröffnung aufweist, die bei bestimmungsgemäßer Anordnung des Trägerelements in Richtung einer Ohröffnung des dafür vorgesehenen Ohrs orientiert ist, und mit zumindest einem im Hohlraum angeordneten Lautsprecher, dessen Kavität zumindest teilweise durch einen ersten Hohlraumbereich des Trägerelements ausgebildet ist und mittels dem erste Schallwellen über die Primäröffnung in Richtung des beabstandeten Ohrs aussendbar sind. Des Weiteren betrifft die vorliegende Erfindung eine Brille, insbesondere eine Datenbrille, zur Ein-/Ausgabe von visuellen und/oder auditiven Informationen mit einem Audiosystem, gemäß dem Anspruch 11.

Aus der US 2009/0180657 A1 und US 2013/0308786 A1 sind Kopfhörer bekannt, die über dem Ohr getragen werden.

Aus der WO 2017/123580 A1 ist ein Kopfhörer bekannt, der beabstandet vom Ohr getragen wird.

Aus der US 2014/0270316 A1 ist eine Brille offenbart, die einen Lautsprecher und ein akustisches Schallleitelement aufweist, mittels dem der von dem Lautsprecher erzeugte Schall zur Ohröffnung eines Benutzers geleitet werden kann, so dass nur der Benutzer diese Audioinformationen wahrnehmen kann. Das Schallleitelement erstreckt sich hierbei vom Bügel der Brille ausgehend in die Ohröffnung des Benutzers hinein. Nachteilig hierbei ist, dass durch die unmittelbare Anordnung des Schallleitelementes an der Ohröffnung Umgebungsgeräusche gedämpft werden. Des Weiteren wird es von Benutzern als störend empfunden, wenn das Audiosystem unmittelbar an der Ohröffnung oder in der Ohröffnung angeordnet ist.

Aus der US 2014/0268016 A1 ist eine Brille bekannt, wobei in die Brillenbügel jeweils ein Lautsprecher integriert ist. Eine Schallaustrittsöffnung des jeweiligen Lautsprechers befindet sich an einer Unterseite des korrespondierenden Brillenbügels.

Aus der US 2003/0067585 A1 ist eine Brille mit Brillenbügeln bekannt, die jeweils mit einer Halteschlaufe ausgebildet sind, die sich über das Ohr erstreckt. In dieser Halteschlaufe ist jeweils eine Lautsprecherhalterung mit einem integrierten Lautsprecher derart angeordnet, dass sich diese über der Ohröffnung befindet. Die Primäröffnungen sind an einer zum Ohr hinzeigenden Seitenfläche der Lautsprecherhalterung angeordnet.

Aufgabe der vorliegenden Erfindung ist es somit, ein Audiosystem zum Anordnen im Außenbereich eines Ohres zu schaffen, mittels dem einem Benutzer Audioinformationen übermittelt werden können, ohne dass diese von in der Umgebung befindlichen Personen wahrnehmbar sind, relevante Umgebungsgeräusche nicht gedämpft werden und/oder der Tragekomfort erhöht werden kann.

Die Aufgabe wird gelöst durch ein Audiosystem zum Anordnen im Außenbereich eines Ohres sowie durch eine Brille zur Ein-/Ausgabe von visuellen und/oder auditiven Informationen mit den Merkmalen der unabhängigen Patentansprüche.

Vorgeschlagen wird ein Audiosystem zum Anordnen im Außenbereich eines Ohres. Bei bestimmungsgemäßer Anordnung des Audiosystems ist dieses demnach vom Ohr, insbesondere der Ohröffnung, beabstandet. Das Audiosystem weist ein am Kopf des Benutzers anbringbares Trägerelement auf, das zumindest einen Hohlraum mit einer Primäröffnung aufweist. Die Primäröffnung ist am Trägerelement derart angeordnet, dass diese bei bestimmungsgemäßer Anordnung des Trägerelements in Richtung der Ohröffnung des dafür vorgesehenen Ohres orientiert ist. Die Primäröffnung ist demnach vorzugsweise vom dafür vorgesehenen Ohr beabstandet und/oder befindet sich somit vorzugsweise seitlich neben dem Ohr und/oder ist in Richtung der Ohröffnung ausgerichtet. Des Weiteren umfasst das Audiosystem zumindest einen im Hohlraum angeordneten Lautsprecher. Hierbei handelt es sich vorzugsweise um einen MEMS-Lautsprecher. Die Kavität des Lautsprechers ist zumindest teilweise durch einen ersten Hohlraumbereich des Hohlraums ausgebildet. Mittels des Lautsprechers können erste Schallwellen über die Primäröffnung in Richtung des beabstandeten Ohrs ausgesendet werden.

Um ein akustisches Strahlformen bzw. "beamforming" zu ermöglichen - bei dem die in die Umgebung abgegebenen Audiosignale auf ein Minimum reduziert werden und/oder im Wesentlichen auf die Ohröffnung des Benutzers fokussiert werden - weist der Hohlraum eine im ersten Hohlraumbereich derart angeordnete Sekundäröffnung auf, dass diese bei bestimmungsgemäßer Anordnung des Trägerelements vom Ohr weg in die Umgebung orientiert ist. Hierdurch können mittels des Lautsprechers über die Sekundäröffnung zweite Schallwellen ausgesendet werden, die zu den ersten Schallwellen phasenversetzt sind. Hierbei ist der Phasenversatz derart ausgebildet, dass die Lautstärke der von dem Audiosystem in die Umgebung abgegebenen Schallwellen reduzierbar ist. Vorteilhafterweise können somit vom Audiosystem an den Benutzer auditive Informationen übermittelt werden, ohne dass diese von in der Nähe befindlichen Personen wahrgenommen werden können. Zugleich kann durch die berührungslose, d.h. vom Ohr des Benutzers beabstandete, Ausbildung des Audiosystems und dem damit einhergehenden hohen Tragekomfort eine sehr hohe Kundenakzeptanz erzielt werden. Der Benutzer muss demnach keine störenden Elemente in unmittelbarer Nähe der Ohröffnung tragen, da die Audiosignale aus einem vom Ohr beabstandeten Bereich fokussiert bis zur Ohröffnung übertragen werden.

Die Primäröffnung und die Sekundäröffnung sind an zwei unterschiedlichen und/oder voneinander abgewandten Seiten des Trägerelements angeordnet.

Hierbei ist die eine dieser beiden Seiten in Richtung der dafür vorgesehenen Ohröffnung und die andere Seite von der Ohröffnung weg in die Umgebung orientiert. Um die über die Primäröffnung teilweise auch an die Umgebung abgegebenen Schallwellen über die Sekundäröffnung eliminieren zu können, ist es vorteilhaft, wenn die Primäröffnung und die Sekundäröffnung in um mindestens 90° und max. 180° zueinander verdrehte Richtungen orientiert sind. Hierdurch ist sichergestellt, dass die Sekundäröffnung weit genug von der Ohröffnung weg zeigt, so dass über diese nur die in die Umgebung abgegebenen Schallwellen eliminiert werden. Vorteilhaft ist es, wenn die Öffnungsfläche der Sekundäröffnung im Vergleich zu der Öffnungsfläche der Primäröffnung geringfügig kleiner oder gleich groß ist.

Ferner ist es vorteilhaft, wenn das Audiosystem eine mit dem Lautsprecher elektrisch verbundene Steuereinheit zum akustischen Strahlformen umfasst. Diese ist vorzugsweise in dem Trägerelement integriert. Hierdurch kann sichergestellt werden, dass der Lautsprecher derart angesteuert wird, dass die relevanten Audioinformationen ausschließlich dem Benutzer zur Verfügung gestellt werden, und in der Umgebung befindliche Personen nichts hören.

In einer vorteilhaften Weiterbildung der Erfindung ist die Steuereinheit derart ausgebildet, dass die von dem zumindest einen Lautsprecher über die Primäröffnung ausgesendeten ersten Schallwellen im Bereich der Ohröffnung fokussierbar sind. Hierdurch können die versehentlich in die Umgebung abgegebenen Schallwellen reduziert werden. Zusätzlich oder alternativ ist es ferner vorteilhaft, wenn die Steuereinheit derart ausgebildet ist, dass die zweiten Schallwellen einen Phasenversatz von im Wesentlichen 180° aufweisen. Hierdurch können die über die Primäröffnung versehentlich in die Umgebung abgegebenen ersten Schallwellen durch die über die Sekundäröffnung um 180° faserversetzten zweiten Schallwellen eliminiert werden. In der Umgebung befindliche Personen können demnach die dem Benutzer zugeordneten Audioinformationen nicht wahrnehmen.

Um bezüglich der Anordnung des Lautsprechers höhere Freiheiten haben zu können, ist es vorteilhaft, wenn der Lautsprecher einen zur Primäröffnung führenden Schallleitkanal aufweist. Dieser ist vorzugsweise zumindest teilweise durch einen zweiten Hohlraumbereich des Hohlraums ausgebildet. Die vom Lautsprecher erzeugten ersten Schallwellen werden demnach über den Schallleitkanal zur Primäröffnung geleitet.

Zur Vereinfachung der Herstellung und auch zum nachträglichen Austauschen des Audiosystems ist es vorteilhaft, wenn das Trägerelement zwei miteinander verbundene Gehäuseteile umfasst, zwischen denen der Hohlraum ausgebildet ist. Die Gehäuseteile können lösbar oder fest miteinander verbunden sein. Vorzugsweise ist der erste und/oder zweite Hohlraumbereich teilweise im ersten und zweiten Gehäuseteil ausgebildet. Die Gehäuseteile weisen in diesem Fall somit beide eine konkav nach innen gewölbte Ausnehmung auf, die beim Zusammensetzen den Hohlraum ausbilden.

Zur einfachen Montage des Audiosystems ist es vorteilhaft, wenn der Lautsprecher zwischen den beiden Gehäuseteilen angeordnet und/oder verspannt ist. Hierfür weist zumindest eines der beiden Gehäuseteile vorzugsweise eine Fixieraussparung auf, in der der Lautsprecher formschlüssig gehalten ist. Der Lautsprecher liegt hierbei insbesondere seitlich und/oder im Randbereich einer seiner beiden Stirnseiten an der Fixieraussparung an.

In einer vorteilhaften Weiterbildung der Erfindung sind die beiden Hohlraumbereiche durch den dazwischen angeordneten Lautsprecher voneinander getrennt und/oder mittels eines Dichtungselementes voneinander abgedichtet. Hierdurch kann vermieden werden, dass in den ersten Hohlraumbereich ausgesendete erste Schallwellen in den zweiten Hohlraumbereich dringen können. Gleichermaßen wird mittels des Dichtungselementes auch vermieden, dass vom Lautsprecher in den zweiten Hohlraumbereich ausgesendete zweite Schallwellen in den ersten Hohlraumbereich dringen können. Hierdurch kann eine sehr hohe Audioqualität sichergestellt werden.

Um ein vollständiges Abdichten sicherstellen zu können, ist es vorteilhaft, wenn das Dichtungselement als Rahmen ausgebildet ist und/oder zwischen dem Lautsprecher, insbesondere auf seiner der Fixieraussparung abgewandten Stirnseite, und einem der beiden Gehäuseteile verpresst ist.

Zur kompakten Ausbildung des Audiosystems ist es vorteilhaft, wenn der Lautsprecher ein MEMS-Lautsprecher ist. Hierbei handelt es sich vorzugsweise um einen piezoelektrischen MEMS-Lautsprecher. Dieser umfasst eine Membran und eine piezoelektrische Aktuatorschicht bzw. Aktuator. Die Membran des MEMS-Lautsprechers kann von dem Aktuator bzw. von der Aktuatorschicht beabstandet und/oder über eine zwischen diesen beiden angeordnete Hubstruktur gekoppelt sein.

Vorteilhafterweise umfasst der Lautsprecher eine entlang einer Hubachse auslenkbare Membran, wobei die Primäröffnung und/oder Sekundäröffnung vorzugsweise schräg, insbesondere im Wesentlichen um 90° geneigt, zur Hubachse ausgerichtet ist. Hierdurch kann eine sehr kompakte Bauform des Audiosystems realisiert werden.

Vorteilhaft ist es, wenn das Audiosystem zumindest einen Tieftonlautsprecher und/oder zumindest zwei Hochtonlautsprecher umfasst. Zum Strahlformen ist es vorteilhaft, wenn die Primäröffnungen der beiden Hochtonlautsprecher voneinander, insbesondere zwischen 1 cm bis 5 cm, besonders bevorzugt 2 cm, beabstandet sind. Diesbezüglich ist es ferner vorteilhaft, wenn die Steuereinheit zum akustischen Strahlformen derart ausgebildet ist, dass die beiden Hochtonlautsprecher mit einem in Abhängigkeit des Abstandes bestimmten Phasenversatzes ansteuerbar sind. Hierdurch können die an die Umgebung abgegebenen ersten Schallwellen auf die Ohröffnung fokussiert und die in die Umgebung abgegebenen Schallwellen reduziert werden. Vorteilhaft ist es, wenn die Hochtonlautsprecher keine Sekundäröffnung aufweisen.

Auch ist es vorteilhaft, wenn zwischen den beiden Hochtonlautsprechern der Tieftonlautsprecher angeordnet ist. Hierdurch kann das Audiosystem sehr platzsparend ausgebildet werden. Des Weiteren kann der Abstand zwischen den beiden Hochtonlautsprechern erhöht werden, was sich wiederum vorteilhaft auf das Strahlformen auswirkt. Alternativ ist es aber auch ebenso vorteilhaft, wenn der Tieftonlautsprecher im Randbereich des Lautsprecher-Arrays angeordnet ist, da somit dessen Kavität auf der dem benachbarten Lautsprecher abgewandten Seite vergrößert werden kann.

Um die Lautsprecher des Audiosystems optimal in einem der Ohrkontur folgenden Bereich anordnen zu können, ist es vorteilhaft, wenn die Primäröffnungen der Lautsprecher an einer gebogenen Außenfläche des Trägerelements angeordnet sind. Hierdurch kann vorteilhafterweise sichergestellt werden, dass bei bestimmungsgemäßer Anordnung des Trägerelements im Wesentlichen alle Primäröffnungen gleich weit von der Ohröffnung beabstandet sind. Vorteilhafterweise kann somit die Qualität der akustischen Strahlformung optimiert werden.

Auch ist es vorteilhaft, wenn das Audiosystem ein Mikrofon, insbesondere ein MEMS-Mikrofon, umfasst und/oder die Steuereinheit derart ausgebildet ist, dass von dem Mikrofon erfasste Störgeräusche durch entsprechende Ansteuerung zumindest eines Lautsprechers unterdrückbar sind.

Das Trägerelement ist in einem Brillenbügel einer Brille integriert. Alternativ ist das Trägerelement als Brillenbügel ausgebildet. Hierbei sind die Primäröffnungen der Lautsprecher im Bereich einer Unterseite und die Sekundäröffnungen im Bereich einer Seitenfläche und/oder Oberseite des Brillenbügels angeordnet. Die an der Unterseite angeordneten Primäröffnungen können somit, insbesondere bei einer gebogenen Ausführung der Unterseite, auf die Ohröffnung ausgerichtet sein, wohingegen zugleich die Sekundäröffnungen der Lautsprecher von dieser weg, in die Umgebung, orientiert sind.

Vorgeschlagen wird ferner eine Brille, insbesondere eine Daten-Brille, zur Ein-/Ausgabe von visuellen und/oder auditiven Informationen. Die Brille umfasst ein Audiosystem. Das Audiosystem ist gemäß der vorangegangenen Beschreibung ausgebildet, wobei die genannten Merkmale einzeln oder in beliebiger Kombination vorhanden sein können. Hierdurch kann eine Brille mit einem Audiosystem geschaffen werden, die sich durch einen sehr hohen Tragekomfort auszeichnet, da keine Komponenten des Audiosystems in unmittelbarer Nähe der Ohröffnung oder sogar in der Ohröffnung selbst angeordnet werden müssen. Stattdessen ist das Audiosystem berührungslos, d.h. vollständig beabstandet von der Ohröffnung, tragbar. Des Weiteren können mittels dieser Brille Audioinformationen ausschließlich dem Benutzer zur Verfügung gestellt werden, ohne dass in der Umgebung befindliche Personen mithören können.

Weitere Vorteile der Erfindung sind in den nachfolgenden Ausführungsbeispielen beschrieben. Es zeigt:
- **Figur 1**: eine Seitenansicht einer Brille mit einem im Brillenbügel integrierten schematisch dargestellten Audiosystem,
- **Figur 2**: eine perspektivische Rückansicht eines Brillenbügels mit mehreren an der Unterseite angeordneten Primäröffnungen und an der Oberseite angeordneten Sekundäröffnungen,
- **Figur 3**: einen Längsschnitt durch einen Brillenbügel und
- **Figur 4**: einen Querschnitt durch einen Brillenbügel im Bereich eines Lautsprechers des Audiosystems.

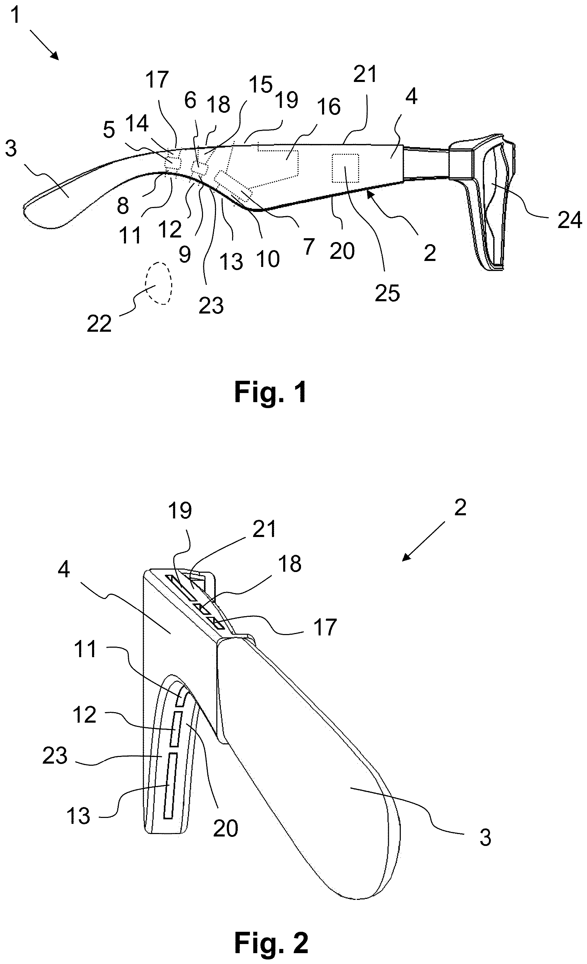

Figur 1 zeigt eine Brille 1 mit einem integrierten Audiosystem 2. Die Brille 1 ist als Daten-Brille ausgebildet, mittels der dem Benutzer visuelle Informationen, insbesondere AR-Informationen (Augmented Reality), dargestellt werden können. Sie umfasst eine hier nicht dargestellte Speichereinheit sowie eine Schnittstelle, mittels der die Brille 1 mit anderen Systemen insbesondere kabellos kommunizieren kann.

Durch das Audiosystem 2 kann die Brille 1 ihrem Benutzer auch Audioinformationen übermitteln. Gemäß dem vorliegenden Ausführungsbeispiel ist das Audiosystem 2 in einem Brillenbügel 3 der Brille 1 integriert. Alternativ ist es aber auch ebenso denkbar, dass zumindest Teile des Audiosystems 2 lösbar an der Brille 1 befestigbar sind. Das Audiosystem 2 umfasst ein Trägerelement 4, in dem die weiteren Komponenten des Audiosystems 2 integriert sind. Vorliegend bildet der Brillenbügel 3 das Trägerelement 4. Alternativ kann es sich aber bei dem Trägerelement 4 auch um ein separates Bauteil handeln, das an dem Brillenbügel 3 lösbar befestigt ist.

Das Audiosystem 2 umfasst mehrere Lautsprecher 5, 6, 7. Diese sind vorliegend als MEMS-Lautsprecher ausgebildet. Die Lautsprecher 5, 6, 7 weisen jeweils einen Schallleitkanal 8, 9, 10 auf, der an seinem dem Lautsprecher 5, 6, 7 abgewandten Ende jeweils eine Primäröffnung 11, 12, 13 aufweist. Des Weiteren umfasst jeder der Lautsprecher 5, 6, 7 eine Kavität 14, 15, 16. Die Kavitäten 14, 15, 16 sind jeweils auf der der Primäröffnung 11, 12, 13 abgewandten Seite des jeweiligen Lautsprechers 5, 6, 7 angeordnet. Die Kavitäten 14, 15, 16 der Lautsprecher 5, 6, 7 weisen jeweils eine Sekundäröffnung 17, 18, 19 auf. Die Sekundäröffnungen 17, 18, 19 sind am Trägerelement 4 auf einer der jeweils zugehörigen Primäröffnung 11, 12, 13 abgewandten Seite des Trägerelements 4 angeordnet.

Wie aus Figur 1 und 2 hervorgeht, sind die Primäröffnungen 11, 12, 13 bei bestimmungsgemäßer Anordnung des Trägerelements 4 bzw. des Brillenbügels 3 an einer Unterseite 20 des Trägerelements 4 angeordnet. Die Sekundäröffnungen 17, 18, 19 sind im Gegensatz dazu an einer gegenüberliegenden Oberseite 21 des Trägerelements 4 positioniert. Die Primäröffnungen 11, 12, 13 und die jeweils korrespondierenden Sekundäröffnungen 17, 18, 19 sind demnach voneinander abgewandt und/oder an unterschiedlichen Seiten des Trägerelements 4 positioniert.

Gemäß Figur 1 sind die Primäröffnungen 11, 12, 13 derart an der Unterseite 20 angeordnet und/oder derart ausgerichtet, dass diese bei bestimmungsgemäßer Anordnung der Brille 1 auf eine Ohröffnung 22 des Benutzers ausgerichtet sind. Des Weiteren weisen die Primäröffnungen 11, 12, 13 im Wesentlichen den gleichen Abstand zur Ohröffnung 22 auf. Hierfür weist die Unterseite 20 des Trägerelements 4 eine entsprechend gebogene Außenfläche 23 auf. Die Außenfläche 23 ist hierfür konkav gekrümmt, so dass sich die Höhe des Brillenbügels 3 in Richtung der Gläser 24 vergrößert. Zumindest der vorderste Lautsprecher 7 des Lautsprecherarrays ist hierdurch nach hinten in Richtung der Ohröffnung 22 ausgerichtet.

Des Weiteren umfasst das Audiosystem 2 gemäß Figur 1 eine Steuereinheit 25. Die Steuereinheit 25 ist elektrisch mit den Lautsprechern 5, 6, 7 verbunden und gemäß dem vorliegenden Ausführungsbeispiel in dem Trägerelement 4 bzw. in den Brillenbügel 3 integriert. Des Weiteren ist die Steuereinheit 25 derart ausgebildet, dass mittels dieser eine Strahlformung der Audiosignale ("beamforming") erfolgen kann. Hierbei werden die von den Lautsprechern 5, 6, 7 ausgesendeten Schallwellen auf die Ohröffnung 22 des Benutzers fokussiert und/oder die in die Umgebung abgegebenen Schallwellen reduziert. Vorteilhafterweise kann somit sichergestellt werden, dass die von dem Audiosystem 2 ausgegebenen Audioinformationen ausschließlich dem Träger der Brille 1 zur Verfügung gestellt werden und nicht von anderen, im unmittelbaren Umfeld befindlichen Personen, wahrgenommen werden.

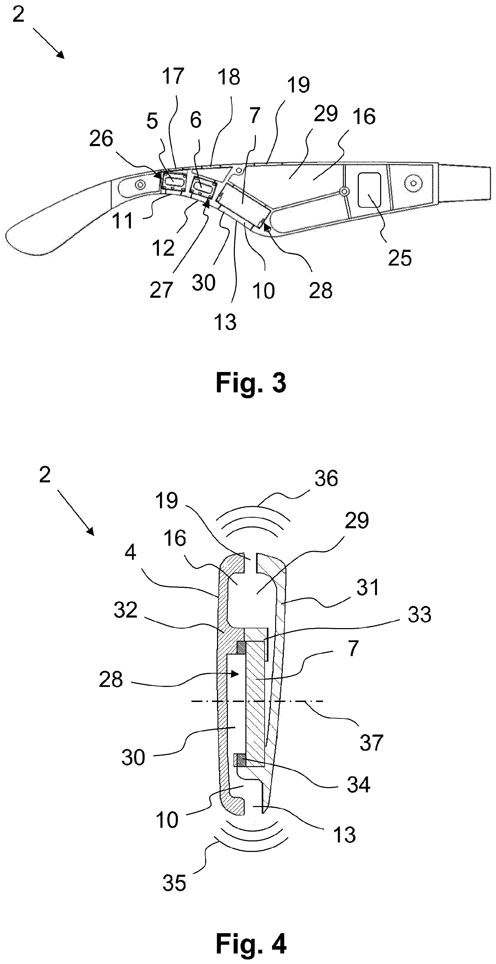

Wie aus den Figuren 1 und 3 hervorgeht, weist das Audiosystem 2 gemäß dem vorliegenden Ausführungsbeispiel drei Lautsprecher 5, 6, 7 auf. Der erste Lautsprecher 5 und der zweite Lautsprecher 6 sind hierbei als Hochtonlautsprecher ausgebildet. Der dritte Lautsprecher 7 ist im Gegensatz dazu als Tieftonlautsprecher ausgebildet. Dieser weist demnach im Vergleich zu den ersten und zweiten Lautsprechern 5, 6 eine größere Kavität 16 auf. Die beiden Hochtonlautsprecher 5, 6 sind gemäß Figur 1 unmittelbar zueinander benachbart. Der Tieftonlautsprecher bildet in diesem Lautsprecher-Array den vordersten Lautsprecher 7. Alternativ ist es aber auch ebenso denkbar, dass der Tieftonlautsprecher 7 zwischen den beiden Hochtonlautsprechern 5, 6 angeordnet ist. Hierdurch kann der Abstand zwischen den Primäröffnungen 11, 12 des ersten und zweiten Lautsprechers 5, 6 vergrößert werden.

Figur 3 zeigt einen Längsschnitt durch das Trägerelement 4 bzw. den Brillenbügel 3. Hieraus wird ersichtlich, dass das Trägerelement 4 mehrere durch Wände voneinander getrennte Hohlräume 26, 27, 28 aufweist (vgl. auch Figur 4). Die Hohlräume 26, 27, 28 sind jeweils einem der Lautsprecher 5, 6, 7 zugeordnet. Die Lautsprecher 5, 6, 7 sind gemäß Figur 3 derart in dem jeweils zugeordneten Hohlraum 26, 27, 28 angeordnet, dass ein erster Hohlraumbereich 29 zumindest teilweise die Kavität 16 des dazugehörigen Lautsprechers 7 bildet. Des Weiteren trennt der jeweilige Lautsprecher 7 den dazugehörigen Hohlraum 28 derart, dass ein zweiter Hohlraumbereich 30 ausgebildet ist. Dieser zweite Hohlraumbereich 30 bildet den Schallleitkanal 10 des jeweiligen Lautsprechers 7. Aus Gründen der Übersichtlichkeit ist in Figur 2 nur einer dieser Hohlräume 26, 27, 28 mit entsprechenden Bezugszeichen versehen.

Figur 4 zeigt einen Querschnitt durch das Trägerelement 4 im Bereich des dritten Lautsprechers 7. Dieser ist, wie bereits vorstehend erwähnt, als Tieftonlautsprecher ausgebildet. Wie aus Figur 4 hervorgeht, umfasst das Trägerelement 4 bzw. gemäß dem vorliegenden Ausführungsbeispiel der Brillenbügel 3 ein erstes und zweites Gehäuseteil 31, 32. Die beiden Gehäuseteile 31, 32 erstrecken sich über die gesamte Höhe des Brillenbügels 3. Infolgedessen ist die Primäröffnung 13 und die Sekundäröffnung 19 jeweils zwischen diesen beiden Gehäuseteilen 31, 32 ausgebildet. Die beiden Gehäuseteile 31, 32 sind vorzugsweise lösbar miteinander verbunden, so dass beschädigte Komponenten des Audiosystems 2 ausgetauscht werden können.

Gemäß dem vorliegenden Ausführungsbeispiel ist der Lautsprecher 7 in das erste Gehäuseteil 31 vollständig eingebettet. Hierfür weist das erste Gehäuseteil 31 eine Fixieraussparung 33 auf, in der der Lautsprecher 7 in seinem Randbereich formschlüssig gehalten ist. Der Lautsprecher 7 ist somit zwischen dem ersten und zweiten Hohlraumbereich 29, 30 des Hohlraums 28 angeordnet. Infolgedessen bilden der erste Hohlraumbereich 29, wie bereits vorstehend erwähnt, die Kavität 16 und der zweite Hohlraumbereich 30 den Schallleitkanal 10 des Lautsprechers 7.

In dem Hohlraum 28 ist des Weiteren ein Dichtungselement 34 angeordnet. Mittels diesem kann verhindert werden, dass vom Lautsprecher 7 in den zweiten Hohlraumbereich 30 ausgesendete erste Schallwellen 35 in den ersten Hohlraumbereich 29 eindringen können. Ebenso kann mittels des Dichtungselementes 34 vermieden werden, dass vom Lautsprecher 7 in den ersten Hohlraumbereich 29 ausgesendete zweite Schallwellen 36 in den zweiten Hohlraumbereich 30 eindringen können. Infolgedessen sind die Hohlraumbereiche 29, 30 mittels des Dichtungselementes 34 im Wesentlichen akustisch voneinander entkoppelt und/oder abgedichtet.

Gemäß Figur 4 weist der Lautsprecher 7 eine Hubachse 37 auf, in deren Richtung eine vorliegend nicht im Detail dargestellte Membran des Lautsprechers 7 ausgelenkt werden kann. Gemäß dem vorliegenden Ausführungsbeispiel ist der Lautsprecher 7 derart in dem Brillenbügel 3 angeordnet, dass sich seine Hubachse 37 in Querrichtung des Brillenbügels 3 erstreckt. Infolgedessen ist die Primäröffnung 13 und die Sekundäröffnung 19 im Wesentlichen um 90° geneigt zur Hubachse 37 des Lautsprechers 7 ausgerichtet.

Wie insbesondere aus Figur 4 ersichtlich ist, können bei entsprechender Ansteuerung des Lautsprechers 7 über den Schallleitkanal 10 bzw. zweiten Hohlraumbereich 30 erste Schallwellen 35 zur Primäröffnung 13 geleitet werden. Die ersten Schallwellen 35 dringen über die Primäröffnung 13 aus dem Hohlraum 28 des Trägerelements 4 aus und gelangen zur Ohröffnung 22 (vgl. Figur 1).

Aufgrund der Sekundäröffnung 19 ist das Audiosystem 2 zusätzlich auch derart ausgebildet, dass zweite Schallwellen 36 in die Umgebung abgegeben werden können. Demnach gelangen die vom Lautsprecher 7 erzeugten zweiten Schallwellen 36 über die Kavität 16 bzw. den ersten Hohlraumbereich 29 zur Sekundäröffnung 19, wo sie aus dem Trägerelement 4 austreten können. Die Steuereinheit 25 steuert hierbei den Lautsprecher 7 derart an, dass die zweiten Schallwellen 36 im Vergleich zu den ersten Schallwellen 35, insbesondere um 180°, phasenversetzt sind. Hierdurch wird derjenige Anteil der ersten Schallwellen 35, der nicht zur Ohröffnung 22, sondern versehentlich in die Umgebung ausgesendet wurde, über die in die Umgebung ausgestrahlten zweiten Schallwellen 36 eliminiert, so dass die ersten Schallwellen 35 im Wesentlichen ausschließlich im Bereich der Ohröffnung 22 hörbar sind.

Die Sekundäröffnung 19 ist vorzugsweise im Wesentlichen genauso groß wie die dazugehörige Primäröffnung 13. Alternativ ist die Sekundäröffnung 19 kleiner ausgebildet, wobei diese vorzugsweise maximal 5%, 10%, 20%, 25% oder 30% kleiner als die Primäröffnung 13 ausgebildet ist.

Die als Hochtonlautsprecher ausgebildeten Lautsprecher 5, 6 können gemäß dem vorliegenden Ausführungsbeispiel in identischer Art und Weise ausgebildet sein. Alternativ ist es aber auch ebenso möglich, dass die als Hochtonlautsprecher ausgebildeten Lautsprecher 5, 6 keine Sekundäröffnung 17, 18 aufweisen, sondern lediglich der als Tieftonlautsprecher ausgebildete Lautsprecher 7. Zusätzlich oder alternativ kann die Steuereinheit 25 zum akustischen Strahlformen derart ausgebildet sein, dass die beiden als Hochtonlautsprecher ausgebildeten Lautsprecher 5, 6 mit einem zueinander ausgebildeten Phasenversatz angesteuert werden können. Dieser Phasenversatz wird von der Steuereinheit 25 in Abhängigkeit des Abstandes zwischen diesen beiden Lautsprechern 5, 6 bzw. insbesondere zwischen ihren beiden Primäröffnungen 11, 12 festgelegt.

Vorteilhafterweise können mittels des vorstehend beschriebenen Audiosystems 2 an den Benutzer Audioinformationen (erste Schallwellen 35) übermittelt werden, ohne dass diese von in der Nähe befindlichen Personen wahrgenommen werden können. Zugleich kann durch die berührungslose, d.h. vom Ohr des Benutzers beabstandete, Ausbildung des Audiosystems 2 und dem damit einhergehenden hohen Tragekomfort eine sehr hohe Kundenakzeptanz erzielt werden.

Die vorliegende Erfindung ist nicht auf die dargestellten und beschriebenen Ausführungsbeispiele beschränkt. Abwandlungen im Rahmen der Patentansprüche sind ebenso möglich wie eine Kombination der Merkmale, auch wenn diese in unterschiedlichen Ausführungsbeispielen dargestellt und beschrieben sind.

### Bezugszeichenliste

- 1: Brille
- 2: Audiosystem
- 3: Brillenbügel
- 4: Trägerelement
- 5: erster Lautsprecher
- 6: zweiter Lautsprecher
- 7: dritter Lautsprecher
- 8: erster Schallleitkanal
- 9: zweiter Schallleitkanal
- 10: dritter Schallleitkanal
- 11: erste Primäröffnung
- 12: zweiter Primäröffnung
- 13: dritte Primäröffnung
- 14: erste Kavität
- 15: zweite Kavität
- 16: dritte Kavität
- 17: erste Sekundäröffnung
- 18: zweite Sekundäröffnung
- 19: dritte Sekundäröffnung
- 20: Unterseite
- 21: Oberseite
- 22: Ohröffnung
- 23: gebogene Außenfläche
- 24: Gläser
- 25: Steuereinheit
- 26: erster Hohlraum
- 27: zweiter Hohlraum
- 28: dritter Hohlraum
- 29: erster Hohlraumbereich
- 30: zweiter Hohlraumbereich
- 31: erstes Gehäuseteil
- 32: zweites Gehäuseteil
- 33: Fixieraussparung
- 34: Dichtungselement
- 35: erste Schallwellen
- 36: zweite Schallwellen
- 37: Hubachse

## Patentansprüche

1. Audiosystem (2) zum derartigen Anordnen im Außenbereich eines Ohrs, dass dieses bei bestimmungsgemäßer Anordnung von einer Ohröffnung (22) des Ohrs beabstandet ist,
mit einem Brillenbügel (3),
mit einem am Kopf des Benutzers anbringbaren Trägerelement (4), das in den Brillenbügel (3) integriert ist oder als der Brillenbügel (3) ausgebildet ist und
das zumindest einen Hohlraum (26, 27, 28) mit einer Primäröffnung (11, 12, 13) aufweist, die bei bestimmungsgemäßer Anordnung des Trägerelements (4) in Richtung der beabstandeten Ohröffnung (22) des dafür vorgesehenen Ohrs orientiert ist, und
mit zumindest einem im Hohlraum (26, 27, 28) angeordneten Lautsprecher (5, 6, 7),
mittels dem erste Schallwellen (35) über die Primäröffnung (11, 12, 13) in Richtung des beabstandeten Ohrs aussendbar sind,
dass eine Kavität (14, 15, 16) des Lautsprechers (5, 6, 7) zumindest teilweise durch einen ersten Hohlraumbereich (29) des Hohlraums (26, 27, 28) ausgebildet ist,
dass der Hohlraum (26, 27, 28) eine im ersten Hohlraumbereich (29) derart angeordnete Sekundäröffnung (17, 18, 19) aufweist, dass diese bei bestimmungsgemäßer Anordnung des Trägerelements (4) vom Ohr weg in die Umgebung orientiert ist,
wobei die Sekundäröffnung (17, 18, 19) im Bereich einer Seitenfläche und/oder Oberseite (21) des Brillenbügels (3) angeordnet ist, und dass die Primäröffnung (11, 12, 13) und die Sekundäröffnung (17, 18, 19) an zwei unterschiedlichen und/oder voneinander abgewandten Seiten (20, 21) des Trägerelements (4) angeordnet sind,
so dass mittels des Lautsprechers (5, 6, 7) über die Sekundäröffnung (17, 18, 19) zweite Schallwellen (36) aussendbar sind, die zu den ersten Schallwellen (35) derart phasenversetzt sind, dass die Lautstärke der von dem Audiosystem (2) in die Umgebung abgegebenen Schallwellen reduzierbar sind,
**dadurch gekennzeichnet,**
**dass** die Primäröffnung (11, 12, 13) des Lautsprechers (5, 6, 7) im Bereich einer Unterseite (20) des Brillenbügels (3) angeordnet ist.

2. Audiosystem nach dem vorherigen Anspruch, **dadurch gekennzeichnet, dass** die Primäröffnung (11, 12, 13) und die Sekundäröffnung (17, 18, 19) in um mindestens 90° und maximal 180° zueinander verdrehte Richtungen orientiert sind und/oder zueinander um mindestens 90° und maximal 180° geneigt sind.

3. Audiosystem nach einem oder mehreren der vorherigen Ansprüche, **dadurch gekennzeichnet, dass** das Trägerelement (4) zwei miteinander verbundene Gehäuseteile (31, 32) umfasst, zwischen denen der Hohlraum (26, 27, 28) ausgebildet ist und/oder der Lautsprecher (5, 6, 7) in einer, vorzugsweise in einem der beiden Gehäuseteile ausgebildeten, Fixieraussparung (33) formschlüssig gehalten ist.

4. Audiosystem nach einem oder mehreren der vorherigen Ansprüche, **dadurch gekennzeichnet, dass** der Lautsprecher (5, 6, 7) einen zur Primäröffnung (11, 12, 13) führenden Schallleitkanal (8, 9, 10) aufweist, der zumindest teilweise durch einen zweiten Hohlraumbereich (30) ausgebildet ist.

5. Audiosystem nach dem vorherigen Anspruch 4, **dadurch gekennzeichnet, dass** die beiden Hohlraumbereiche (29, 30) durch den dazwischen angeordneten Lautsprecher (5, 6, 7) voneinander getrennt sind und/oder mittels eines Dichtungselementes (34) voneinander abgedichtet sind.

6. Audiosystem nach dem vorherigen Anspruch 5, **dadurch gekennzeichnet, dass** das Dichtungselement (34) als Rahmen ausgebildet ist und/oder zwischen dem Lautsprecher (5, 6, 7), insbesondere auf seiner der Fixieraussparung (33) abgewandten Stirnseite, und einem der beiden Gehäuseteile (31, 32) verpresst ist.

7. Audiosystem nach einem oder mehreren der vorherigen Ansprüche, **dadurch gekennzeichnet, dass** der Lautsprecher (5, 6, 7) ein MEMS-Lautsprecher (5, 6, 7) ist, als Tiefton- oder Hochtonlautsprecher ausgebildet ist und/oder eine entlang einer Hubachse (37) auslenkbare Membran aufweist.

8. Audiosystem nach dem vorherigen Anspruch 7, **dadurch gekennzeichnet, dass** die Primäröffnung (11, 12, 13) und/oder die Sekundäröffnung (17, 18, 19) schräg, insbesondere im Wesentlichen um 90° geneigt, zur Hubachse (37) ausgerichtet sind.

9. Audiosystem nach einem oder mehreren der vorherigen Ansprüche 4 bis 8, **dadurch gekennzeichnet, dass** das Audiosystem (2) mehrere Lautsprecher (5, 6, 7) mit einem jeweiligen Schallleitkanal (8, 9, 10), der an seinem dem Lautsprecher (5, 6, 7) abgewandten Ende jeweils eine Primäröffnung (11, 12, 13) aufweist, umfasst und/oder dass die Primäröffnungen (11, 12, 13) der Lautsprecher (5, 6, 7) an einer gebogenen Außenfläche (23) des Trägerelements (4) angeordnet sind.

10. Audiosystem nach einem oder mehreren der vorherigen Ansprüche 7 bis 9, **dadurch gekennzeichnet, dass** sich die Hubachse (37) des Lautsprechers (5, 6, 7) in Querrichtung des Brillenbügels (3) erstreckt.

11. Brille (1) zur Ein-/Ausgabe von visuellen und/oder auditiven Informationen mit
einem Audiosystem (2) zum derartigen Anordnen im Außenbereich eines Ohrs, dass dieses bei bestimmungsgemäßer Anordnung von einer Ohröffnung (22) des Ohrs beabstandet ist, mit einem Brillenbügel (3),
mit einem am Kopf des Benutzers anbringbaren Trägerelement (4), das in den Brillenbügel integriert ist oder als der Brillenbügel (3) ausgebildet ist und
das zumindest einen Hohlraum (26, 27, 28) mit einer Primäröffnung (11, 12, 13) aufweist, die bei bestimmungsgemäßer Anordnung des Trägerelements (4) in Richtung der beabstandeten Ohröffnung (22) des dafür vorgesehenen Ohrs orientiert ist, und
mit zumindest einem im Hohlraum (26, 27, 28) angeordneten Lautsprecher (5, 6, 7),
mittels dem erste Schallwellen (35) über die Primäröffnung (11, 12, 13) in Richtung des beabstandeten Ohrs aussendbar sind,
dass eine Kavität (14, 15, 16) des Lautsprechers (5, 6, 7) zumindest teilweise durch einen ersten Hohlraumbereich (29) des Hohlraums (26, 27, 28) ausgebildet ist,
dass der Hohlraum (26, 27, 28) eine im ersten Hohlraumbereich (29) derart angeordnete Sekundäröffnung (17, 18, 19) aufweist, dass diese bei bestimmungsgemäßer Anordnung des Trägerelements (4) vom Ohr weg in die Umgebung orientiert ist, und
dass die Primäröffnung (11, 12, 13) und die Sekundäröffnung (17, 18, 19) an zwei unterschiedlichen und/oder voneinander abgewandten Seiten (20, 21) des Trägerelements (4) angeordnet sind,
so dass mittels des Lautsprechers (5, 6, 7) über die Sekundäröffnung (17, 18, 19) zweite Schallwellen (36) aussendbar sind, die zu den ersten Schallwellen (35) derart phasenversetzt sind, dass die Lautstärke der von dem Audiosystem (2) in die Umgebung abgegebenen Schallwellen reduzierbar sind
**dadurch gekennzeichnet,**
**dass** das Audiosystem nach einem oder mehreren der vorherigen Ansprüche ausgebildet ist.

## Claims

1. An audio system (2) for disposing in the external region of an ear, such that, if disposed as intended, it is spaced from an ear opening (22) of the ear,
having an eyewear earpiece (3),
having a carrier element (4) for applying to the head of the user which is integrated into an eyewear earpiece (3) or is designed as an eyewear earpiece (3) and
comprising at least one hollow space (26, 27, 28) having a primary opening (11, 12, 13) oriented in the direction of the ear opening (22) spaced apart of the intended ear when the carrier element (4) is disposed as intended, and
having at least one speaker (5, 6, 7) disposed in the hollow space (26, 27, 28),
by means of which first sound waves (35) can be emitted through the primary opening (11, 12, 13) in the direction of the ear spaced apart, the cavity (14, 15, 16) of the speaker (5, 6 ,7) being at least partially formed by a first hollow space region (29) of the hollow space (26, 27, 28),
that the hollow space (26, 27, 28) comprises a secondary opening (17, 18, 19) disposed in the first hollow space region (29) such that said opening is oriented away from the ear toward the surroundings when the carrier element (4) is disposed as intended,
wherein the secondary opening (17, 18, 19) is disposed in the region of a side surface and/or a top side (21) of the eyewear earpiece (3), and that the primary opening (11, 12, 13) and the secondary opening (17, 18, 19) are disposed on two different sides (20, 21) and/or sides (20, 21) of the carrier element (4) facing away from each other,
so that second sound waves (36) can be emitted through the secondary opening (17, 18, 19) by means of the speaker (5, 6, 7), said waves (36) being phase-shifted from the first sound waves (35) such that the volume of the sound waves emitted by the audio system (2) into the surroundings can be reduced,
**characterized in that**,
the primary opening (11, 12, 13) of the speaker (5, 6, 7) is disposed in the region of a bottom side (20) of the eyewear earpiece (3).

2. The audio system according to the preceding claim, **characterized in that** the primary opening (11, 12, 13) and the secondary opening (17, 18, 19) are oriented in directions twisted by at least 90° and no greater than 180° with respect to each other and/or are inclined at an angle of at least 90° and no greater than 180° to each other.

3. The audio system according to any one or more of the preceding claims, **characterized in that** the carrier element (4) comprises two housing parts (31, 32) joined to each other, between which the hollow space (26, 27, 28) is implemented and/or the speaker (5, 6, 7) is positively held in a mounting recess (33) preferably implemented in one of the two housing parts.

4. The audio system according to any one or more of the preceding claims, **characterized in that** the speaker (5, 6, 7) comprises a sound guide channel (8, 9, 10) leading to the primary opening (11, 12, 13) and implemented at least partially by a second hollow space region (30).

5. The audio system according to the preceding claim 4, **characterized in that** the two hollow space regions (29, 30) are separated from each other by the speaker (5, 6, 7) disposed between said regions (29, 30) and/or are sealed off from each other by means of a sealing element (34).

6. The audio system according to the preceding claim 5 , **characterized in that** the sealing element (34) is implemented as a frame and/or is pressed between the loudspeaker (5, 6, 7), in particular on its end face facing away from the mounting recess (33), and one of the two housing parts (31, 32).

7. The audio system according to any one or more of the preceding claims, **characterized in that** the speaker (5, 6, 7) is an MEMS speaker (5, 6, 7), is implemented as a bass or treble speaker and/or comprises a membrane displaceable along a stroke axis (37).

8. Audio system according to the preceding claim 7, **characterized in that** the primary opening (11, 12, 13) and/or the secondary opening (17, 18, 19) are oriented obliquely, in particular inclined by substantially 90°, with respect to the stroke axis (37).

9. The audio system according to the preceding claims 4 to 8, **characterized in that** the audio system (2) comprises several speakers (5, 6, 7), with a respective sound guide channel (8, 9, 10) which has a primary opening (11, 12, 13) at its end facing away from the loudspeaker (5, 6, 7) and/or the primary openings (11, 12, 13) of the speakers (5, 6, 7) are disposed on a curved outer surface (23) of the carrier element (4).

10. Audio system according to one or more of the preceding claims 7 to 9, **characterized in that** the stroke axis (37) of the loudspeaker (5, 6, 7) extends in the transverse direction of the eyewear earpiece (3).

11. Eyewear (1) for input/output of visual and/or auditory information with an audio system (2) for arrangement in the outer region of an ear, that is spaced from an ear opening (22) of the ear when arranged as intended, with an eyewear earpiece (3),
with a carrier element (4) which can be attached to the head of the user, which is integrated into the eyewear earpiece (3) or is designed as the eyewear earpiece (3) and
which has at least one cavity (26, 27, 28) with a primary opening (11, 12, 13), which, when the carrier element (4) is arranged as intended, is oriented in the direction of an ear opening (22) spaced apart of the ear provided for it, and
with at least one speaker (5, 6, 7) which is arranged in the cavity (26, 27, 28),
by means of which first sound waves (35) can be emitted via the primary opening (11, 12, 13) in the direction of the ear spaced apart,
the cavity (14, 15, 16) of the speaker (5, 6, 7) is at least partially formed by a first cavity region (29) of the cavity (26, 27, 28) that the cavity (26, 27, 28) has a secondary opening (17, 18, 19) arranged in the first cavity region (29) in such a way, in that, when the carrier element (4) is arranged as intended, is oriented away from the ear into the surroundings, and
that the primary opening (11, 12, 13) and the secondary opening (17, 18, 19) are arranged on two different sides (20, 21) and/or sides (20, 21) of the carrier element (4) facing away from each other,
so that second sound waves (36) can be emitted by means of the loudspeaker (5, 6, 7) via the secondary opening (17, 18, 19), which second sound waves (36) are phase-shifted with respect to the first sound waves (35) in such a way that the volume of the sound waves emitted by the audio system (2) into the environment can be reduced **characterized in that**
the audio system is designed according to one or more of the preceding claims.

## Revendications

1. Système audio (2) destiné à être placé dans la zone extérieure d'une oreille de sorte que, lorsqu'il est disposé conformément à sa destination, il est distant d'une ouverture d'oreille (22) de l'oreille,
avec une branche de lunettes (3),
avec un élément porteur (4) qui peut être fixé sur la tête de l'utilisateur, qui est intégré dans la branche de lunettes (3) ou est conçu en tant que la branche de lunettes (3) et
qui présente au moins une cavité (26, 27, 28) avec une ouverture primaire (11, 12, 13) qui, lorsque l'élément porteur (4) est disposé conformément à sa destination, est orientée dans la direction de l'ouverture d'oreille (22) distante de l'oreille prévue pour lui, et
avec au moins un haut-parleur (5, 6, 7) disposé dans la cavité (26, 27, 28),
au moyen duquel de premières ondes acoustiques (35) peuvent être émises par l'ouverture primaire (11, 12, 13) dans la direction de l'oreille distante,
une cavité (14, 15, 16) du haut-parleur (5, 6, 7) formée au moins partiellement par une première zone de cavité (29) de la cavité (26, 27, 28),
la cavité (26, 27, 28) présente une ouverture secondaire (17, 18, 19) disposée dans la première zone de cavité (29) de telle sorte que celle-ci soit orientée à l'opposé de l'oreille vers l'environnement lorsque l'élément porteur (4) est disposé conformément à sa destination, dans lequel l'ouverture secondaire (17, 18, 19) est disposée dans la zone d'une surface latérale et/ou d'une surface supérieure (21) de la branche de lunettes (3), et
l'ouverture primaire (11, 12, 13) et l'ouverture secondaire (17, 18, 19) sont disposées sur deux côtés (20, 21) différents et/ou mutuellement détournés l'un de l'autre de l'élément porteur (4),
de sorte que de secondes ondes acoustiques (36) peuvent être émises au moyen du haut-parleur (5, 6, 7) via l'ouverture secondaire (17, 18, 19), qui sont déphasées par rapport aux premières ondes acoustiques (35) de telle sorte que le volume acoustique des ondes acoustiques émises par le système audio (2) dans l'environnement peut être réduit,
**caractérisé en ce que**
l'ouverture primaire (11, 12, 13) du haut-parleur (5, 6, 7) est disposée dans la zone d'une face inférieure (20) de la branche de lunettes (3).

2. Système audio selon la revendication précédente, **caractérisé en ce que** l'ouverture primaire (11, 12, 13) et l'ouverture secondaire (17, 18, 19) sont orientées dans des directions tournées d'au moins 90° et d'au plus 180° l'une par rapport à l'autre et/ou sont inclinées d'au moins 90° et d'au plus 180° l'une par rapport à l'autre.

3. Système audio selon l'une quelconque ou plusieurs des revendications précédentes, **caractérisé en ce que** l'élément porteur (4) comprend deux parties de boîtier (31, 32) reliées l'une à l'autre, entre lesquelles est formée la cavité (26, 27, 28) et/ou le haut-parleur (5, 6, 7) est maintenu par complémentarité de formes dans un évidement de fixation (33) qui est formé de préférence dans l'une des deux parties de boîtier.

4. Système audio selon l'une quelconque ou plusieurs des revendications précédentes, **caractérisé en ce que** le haut-parleur (5, 6, 7) possède un canal de conduction acoustique (8, 9, 10) menant à l'ouverture primaire (11, 12, 13), lequel est formé au moins partiellement par une seconde zone de cavité (30).

5. Système audio selon la revendication 4 précédente, **caractérisé en ce que** les deux zones de cavité (29, 30) sont séparées l'une de l'autre par le haut-parleur (5, 6, 7) disposé entre elles et/ou sont étanchées l'une par rapport à l'autre au moyen d'un élément d'étanchéité (34).

6. Système audio selon la revendication 5 précédente, **caractérisé en ce que** l'élément d'étanchéité (34) est réalisé sous forme de cadre et/ou est pressé entre le haut-parleur (5, 6, 7), en particulier sur sa face frontale détournée de l'évidement de fixation (33), et l'une des deux parties de boîtier (31, 32).

7. Système audio selon l'une quelconque ou plusieurs des revendications précédentes, **caractérisé en ce que** le haut-parleur (5, 6, 7) est un haut-parleur MEMS (5, 6, 7), se présente sous la forme d'un haut-parleur de sons graves ou d'un haut-parleur de sons aigus et/ou présente une membrane déflectible le long d'un axe de course (37).

8. Système audio selon la revendication 7 précédente, **caractérisé en ce que** l'ouverture primaire (11, 12, 13) et/ou l'ouverture secondaire (17, 18, 19) est/sont orientée(s) obliquement, en particulier inclinée(s) sensiblement de 90°, par rapport à l'axe de course (37).

9. Système audio selon l'une quelconque ou plusieurs des revendications 4 à 8 précédentes, **caractérisé en ce que** le système audio (2) comprend plusieurs haut-parleurs (5, 6, 7) avec un canal de conduction acoustique (8, 9, 10) respectif, qui présente à son extrémité détournée du haut-parleur (5, 6, 7) respectivement une ouverture primaire (11, 12, 13), et/ou
**en ce que** les ouvertures primaires (11, 12, 13) des haut-parleurs (5, 6, 7) sont disposées sur une surface extérieure (23) courbe de l'élément porteur (4).

10. Système audio selon l'une quelconque ou plusieurs des revendications 7 à 9 précédentes, **caractérisé en ce que** l'axe de course (37) du haut-parleur (5, 6, 7) s'étend dans la direction transversale de la branche de lunettes (3).

11. Lunettes (1) pour l'entrée/la sortie d'informations visuelles et/ou auditives,
avec une branche de lunettes (3) et
un système audio (2) destiné à être disposé dans la zone extérieure d'une oreille, avec un élément porteur (4) qui peut être fixé sur la tête de l'utilisateur, qui est intégré dans la branche de lunettes (3) ou est conçu en tant que la branche de lunettes (3), et
qui présente au moins une cavité (26, 27, 28) avec une ouverture primaire (11, 12, 13) qui, lorsque l'élément porteur (4) est disposé conformément à sa destination, est orientée dans la direction d'une ouverture d'oreille (22) de l'oreille prévue pour lui, et
avec au moins un haut-parleur (5, 6, 7) disposé dans la cavité (26, 27, 28),
au moyen duquel de premières ondes acoustiques (35) peuvent être émises par l'ouverture primaire (11, 12, 13) dans la direction de l'oreille distante,
une cavité (14, 15, 16) du haut-parleur (5, 6, 7) formée au moins partiellement par une première zone de cavité (29) de la cavité (26, 27, 28),
la cavité (26, 27, 28) présente une ouverture secondaire (17, 18, 19) disposée dans la première zone de cavité (29) de telle sorte que celle-ci soit orientée à l'opposé de l'oreille vers l'environnement lorsque l'élément porteur (4) est disposé conformément à sa destination, et l'ouverture primaire (11, 12, 13) et l'ouverture secondaire (17, 18, 19) sont disposées sur deux côtés (20, 21) différents et/ou mutuellement détournés l'un de l'autre de l'élément porteur (4),
de sorte que de secondes ondes acoustiques (36) peuvent être émises au moyen du haut-parleur (5, 6, 7) via l'ouverture secondaire (17, 18, 19), qui sont déphasées par rapport aux premières ondes acoustiques (35) de telle sorte que le volume acoustique des ondes acoustiques émises par le système audio (2) dans l'environnement peut être réduit,
**caractérisées en ce que**
le système audio se présente sous une forme selon l'une quelconque ou plusieurs des revendications précédentes.
